# EUROPEAN PATENT APPLICATION

(11) **EP 1 503 273 A1**
(43) Date of publication of application: **02.02.2005**
(21) Application number: 03017125.0
(22) Date of filing: 29.07.2003
(51) Int. Cl.: G06F 3/033, G06F 3/02, G06F 9/44

(54) **Output interface**

(71) Applicant: Sony Ericsson Mobile Communications AB, 221 88 Lund (SE)
(72) Inventor: Foxenland, Eral, 254 41 Helsingborg (SE)
(74) Representative: Petri, Stellan

(57) **Abstract**

A method and a device for dynamically changing settings of an output interface by sensing use of an input interface. The input and output interfaces may be comprised in the same or separate electronic devices. The output interface may comprise a display (10) and/or a loudspeaker (13) for providing information to a user, and the input interface may comprise a keypad (12), a joystick (14), etc. for inputting information into the device. According to the methods, use of the input interface is sensed. In response to said sensed use at least one setting of the output interface is changed.

## Description

### Technical Field of the Invention

The present invention relates to an output interface for providing information of an electronic device, and more specifically to a dynamic output interface, which may be affected by the use of an input interface.

### Description of Related Art

Many electronic devices comprise an output interface for presenting information to a user. A common output interface is a graphical display unit. The display itself may be a conventional LCD (Liquid Crystal Display) (monochrome or color), or a touch screen,with which the user may input data by writing directly on the screen. Another visual output interface for presenting information is an LED (Light Emitting Diode) diode for indicating the status of a wireless connection between the device and a serving radio access network. The keypad may have visual indicator means or illuminating means for illuminating the keypad when it is dark or indicating an incoming call. A loudspeaker may be an audio output interface for audibly presenting information.

Electronic devices also often have an input interface, with which the user may input data into the device. The input interface may comprise e.g. a keypad, a joystick, a camera, a slider, a rocker key and a microphone.

Different functions of the device may be accessed through a set of icons or menus, such as a phone book of a mobile terminal. Each menu may comprise a sub menu having several sub functions within the main function, such as the sub functions "Find and Call", "Add Number", "Find and Edit", "Voice Labels", etc. of the main function "Phone Book".

With increasing processing capabilities of portable electronic devices, such as mobile terminals, more and more advanced settings of the output interface are available. Different settings of the output interface may comprise themes, wherein each theme has a different set of settings of the output interface, which is automatically initiated when requested by the user. The set of settings may comprise a specific setting of the ring tone type, the ring volume, the back ground color of the menus, the background picture, the color/contrast/brightness composition of menus and icons, etc. There are numerous setting possibilities available for a user. However, with an increasing amount of available setting options, the electronic device will be increasingly complicated to operate. The processing capabilities of portable electronic devices are still limited compared to other processing means, such as personal computers. One limiting factor is the available power capacity. Also, if the user has to navigate through menus in an unnecessary complicated course of action when a certain function is desired, the power consumption may be unnecessarily high.

Portable communication devices more frequently have a game function for playing an electronic game. The setting of the game may provide for different features, such as a certain color, which are static throughout a game session. To alter the color, the user may have to enter a game menu and chose a certain color setting.

Portable communication devices also more frequently have an in-built or attachable digital camera. A snapshot taken by the camera may be used as "wallpaper" or a background picture. The snapshot may be transmitted to another electronic device as e.g. a MMS (Multimedia Messaging Service) message by means of a communication interface of the device. However, the appearance of the snapshot is static unless the user manually manipulates the colors by means of image processing. An external image processor, such as an external computer may provide the image processing. Thus, the image has to be transferred to the external image processor before it may be altered and returned to the portable communication device.

### Summary of the Invention

It is an object of the invention to provide a method and a device for automatically providing changes of at least one setting of an output interface having output means for providing information to a user.

According to a first aspect of the invention ... (section to be inserted when we have found an acceptable claim wording)

Further embodiments of the invention are defined in the dependent claims.

It is an advantage of the invention that changes of settings of an output interface of an electronic device may be made automatically in dependence of interaction with the device. More specifically, it is an advantage that e.g. an icon for choosing a frequently used function may have different appearance when presented on the output interface than that for an infrequently used function. Then, the user may more easily find a certain function in a menu, which he is more likely to be interested in, without actively having to change any setting.

It should be emphasized that the term "comprises/comprising" when used in this specification is taken to specify the presence of stated features, integers, steps or components but does not preclude the presence or addition of one or more other features, integers, steps, components or groups thereof.

### Brief Description of the Drawings

Further objects, features, and advantages of the invention will appear from the following description of several embodiments of the invention, wherein various aspects of the invention will be described in more detail with reference to the accompanying drawings, in which:
Fig. 1a is a front side views of a mobile terminal comprising an input interface and an output interface, and external electronic devices comprising output interfaces;
Fig. 1b is a rear side view of the mobile terminal of Fig. 1a;
Fig. 2a is a block diagram of the input interface and the output interface of the mobile terminal connected to a sensing unit according to the invention;
Fig. 2b is a block diagram of the external electronic devices of Fig. 1;
Fig. 3a is a flow chart of a first embodiment of the method according to the invention;
Fig. 3b is a complementary flow chart to the flow chart of Fig. 3a; and
Fig. 4 is a flow chart of a second embodiment of the method according to the invention.

### Detailed Description of Embodiments

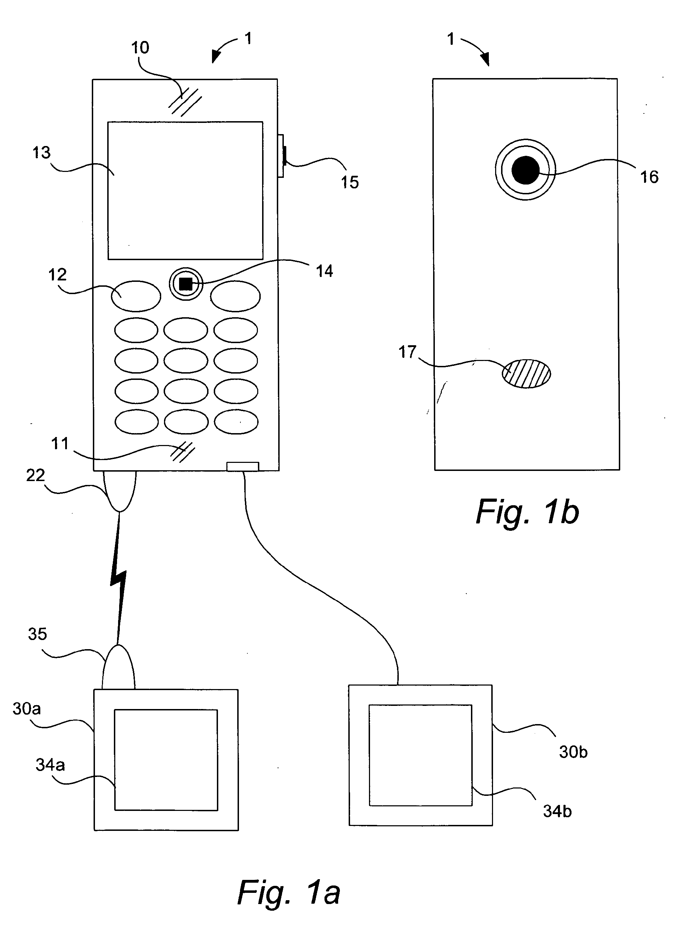

Figs. 1a and 1b illustrate an electronic device embodied as a mobile terminal 1. However, the invention is not limited to a mobile terminal, but can be incorporated into any electronic device having an output interface and an input interface, with which a user interacts. Such electronic devices comprise, but are not limited to, a mobile radio terminal, a mobile telephone, a pager, a personal digital assistant (PDA), a communicator, i.e. a smartphone or an electronic organizer, home electronics comprising at least a display, such as a stereo, a computer, a television, a refrigerator, a freezer, or a car stereo. For convenience, reference to a mobile terminal 1 will be made throughout this description.

The mobile terminal 1 comprises an input interface, through which a user may interact with, and use to input data or information into, the mobile terminal 1. The input interface comprises one or several input means for inputting any information into the mobile terminal 1, such as choosing a certain function by actively navigating through menus and/or icons. The input means may e.g. be used for actively change any setting, answering an incoming call, playing a game, changing setting of volume, receiving a message (e.g. a MMS (Multimedia Messaging Service) or a SMS (Short Messaging Service) message), taking a picture, writing a message, executing a call, using a voice service, listening to music, etc.

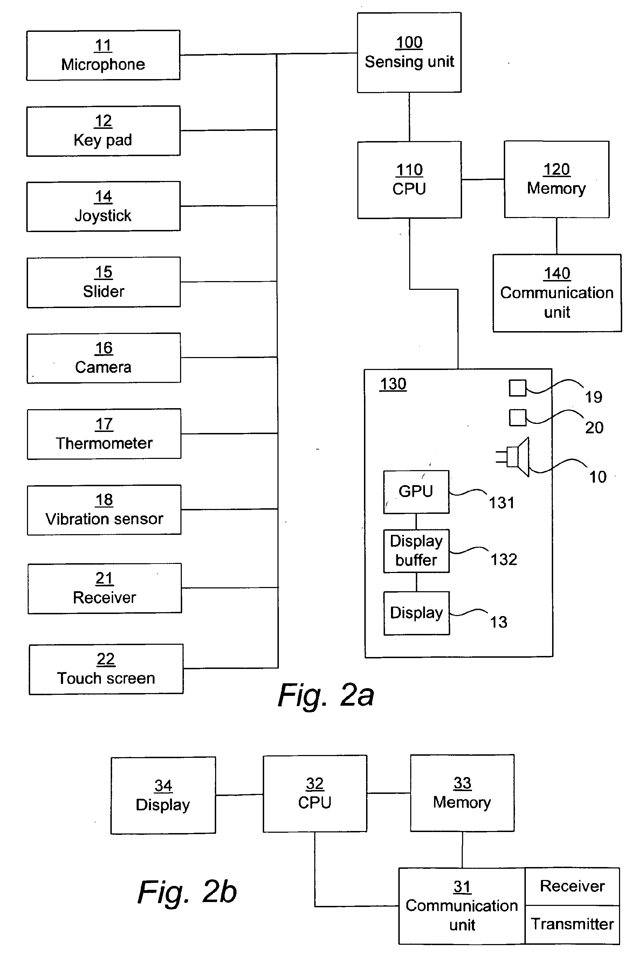

The input means may comprise, but are not limited to, a loudspeaker 10, a microphone 11, a keypad 12, a joystick 14, a slider 15, a camera 16, a thermometer 17, and a vibration sensor 18 (Fig. 2), a touch screen 22 or touch pad, a rocker key, and actuation keys. The actuation keys may be used for accessing certain functions or executing commands, such as increasing/decreasing the volume, taking a picture, entering different communication modes, such as data or voice communication modes.

The microphone 11 may be used for registering the voice of the user during an ongoing call, recording a voice message, requesting a service through voice activation, such as the establishment or answering of an outgoing/incoming call.

The keypad 12 comprises conventional keys for establishing and terminating a call, such as numeral keys "1, 2,..., 9", a "yes" and a "no" key. Further, the key pad may comprise additional keys, such as a "#", a "*", a "clear", a "return", or any other key for entering or retrieving information into/from the mobile terminal 1. The numeral keys may also be used for accessing and/or executing different functions of the terminal, such as playing a game or providing a key lock/unlock function. The numeral keys may also comprise letters for composing a text message.

The joystick 14 may be provided for navigating between different functions of the mobile terminal 1. A short cut to the functions of the mobile terminal, such as a message, a game, a camera, a setting, a phone book, a call handling, and an extra function may be provided as an icon on the display or an item in a menu. Alternatively, the user navigates to a specific function with conventional push keys having an up/down function. The joystick may also be used for navigating within menus. Selection within the menus may also be provided by actuating the joystick if it has a push function.

One or several sliders 15 may be provided at any side of the mobile terminal 1. The slider 15 may also be used as a shortcut to access and execute certain functions directly without the need of entering said function by navigating through menus of the display, such as a volume function. Other functions, such as call handling may also be accessed through the slider. The slider may alternatively be substituted by push buttons provided on any side of the mobile terminal 1. Providing said keys on another side than the keypad 12 has the advantage that they can be easily distinguished from the keys of the conventional keypad 12.

The camera 16 is provided on a rear side of the mobile terminal 1. The camera may alternatively be provided as a separate unit attached to the mobile terminal 1 by means of a connection interface for attaching accessories.

The thermometer 17 is provided within the housing of the mobile terminal 1 in connection with air channels to the outside of the housing for measuring the temperature on the outside of the housing. Alternatively, the thermometer 17 may be arranged to measure the temperature within the housing 17. The thermometer may be positioned such that it can measure a temperature variation. A user picking up and holding the device for a certain period of time can induce such variation. The variation may indicate that a user has held the mobile terminal 1 in his hand for a certain time period. As an additional feature, the thermometer may indicate the temperature of the surrounding environment when the user does not hold the device.

The vibration sensor 18 may sense vibrations caused by the user of the mobile terminal 1. The vibrations may originate when the user is writing a message intensively, playing a game, etc.

The mobile terminal 1 may also comprise a communication interface for communicating with an external electronic device 30a, 30b or a communication network. The communication interface may comprise a wireless and/or wire based interface. The wireless communication interface may comprise one or several antennas 19. The communication interface may be adapted for communication with the external device 30a, 30b via a wireless communication system, such as a telecommunication system according to any communication technique, e.g. a TDMA (Time Division Multiple Access) FDMA (Frequency Division Multiple Access), or CDMA (Code Division Multiple Access) technique. Also, the communication interface may be adapted for communication over a short range supplementary frequency, such as a LAN (Local Area Network), e.g. a Bleutooth® frequency. The communication interface may also comprise means, e.g. an accessory connector, for connecting the external device to the mobile terminal 1 by means of a wire, such as a series cable.

Other wireless or wire based communication interfaces are also possible, such as an IR (Infrared) connection. The communication interface may comprise a receiver 22 and a transmitter for transmitting voice, data, and other messages, such as messages comprising output interface setting information according to the invention.

A receiver 21 of the communication interface may be part of the input interface. Then, use of the receiver, which is triggered by an entity external to the device itself, e.g. a communication network, may be registered. Use triggered by an external device may comprise receiving a message, an incoming call, or any other data, such as data relating to a WAP (Wireless Application Protocol) data. According to the invention, registering activation of the receiver means that use of the input interface is sensed.

The output interface of the mobile terminal 1 may comprise a visual, an audio, a sensory, or a braille output interface. The visual output interface may comprise the display 13, an LED diode 19, and the illuminating means, such as a background light function of the display or the keypad 12. The audio output interface may comprise the loudspeaker 11. The sensory output interface may comprise a vibrator 20. The braille output interface may comprise sensory means for providing information to a blind user.

The display 13 may be a conventional display for presenting information, such as number presentation, remaining battery capacity, connectivity, function menus, icons, still/moving pictures etc. The display may be a monochrome or a color display. Furthermore, the display may be a touch screen type display, on which the user may enter data into the mobile terminal 1 by writing directly on the screen with a suitable input device, such as a pen having a blunt plastic point. Thus, the display may be part of both the output interface and the input interface. Also, the mobile terminal 1 may comprise several displays provided at different portions of the terminal, which interact in operation. A clam shell or foldable terminal may have one display one the outside of the housing, and one which will appear when the terminal is opened for operation.

The external electronic device 30a, 30b comprises an output interface for displaying information to a user. The output interface may comprise the same output means as the mobile terminal 1. Settings of the output interface of the second or external device 30a, 30b may be changed or altered in response to sensed use of the input means of the mobile terminal 1, as will be explained below. As is understood, the external device 30a, 30b may also comprise an input interface corresponding to the input interface of the mobile terminal 1.

The diode 19 may indicate battery status and/or connectivity. A frequency of the emitting of light from the diode 19 may be dependent on the use of a certain input means. Also, the illuminating means may illuminate when it is dark and/or in response to use of the mobile terminal 1. Then, e.g. the brightness of the light may be dependent on the sensed use of the input means.

The loudspeaker 11 may be used for listening to the voice of an incoming call, listening to music, presenting sound of a game, rendering a recorded voice, etc. A controller 110 may automatically order or execute any change of the volume/bas/treble in dependence of sensed use of an input means and user frequency.

Fig. 2a illustrates the input interface of the mobile terminal of Fig. 1 connected to a sensing unit 100. The sensing unit 100 is connected to the controller 110, such as a CPU (central processing unit), a microprocessor, or ASIC (Application Specific Integrated Circuit). The controller 110 is connected to a memory 120, such as a RAM (Random Access Memory) and/or a ROM (Read Only Memory) for storing any information. Moreover, the controller 110 is connected to the output interface 130, which is adapted to provide information to the user. The output interface 130 may comprise one or several controllers for controlling a certain setting or function of the mobile terminal 1 and the output interface. The graphical output interface may comprise a graphics processing unit (GPU) 131 having information regarding objects that shall be presented on the display 13. The controllers, such as the GPU 131, may be provided as a separate hardware component, e.g. as a processor, a DSP (Digital Signal Processor), an ASIC (Application Specific Integrated Circuit), a FPGA (Field-Programmable Gate Array), hard-wired logic, etc. Alternatively, the controllers are software-implemented means, which are provided by software readable code portions to be run by a processor. The graphical output interface may also comprise a display buffer 132, wherein display information, such as pixel samples and settings for related color/contrast/brightness is stored before displaying. The buffer is connected to the GPU 131, which is adapted to execute any change of setting indicated by the controller 110. The GPU 131 may be adapted for presenting still and/or moving pictures.

The controller 110 of the terminal 1 may be connected to a communication unit 140, which is provided for communicating with the communication network or directly with the external device 30a, 30b. The communication unit 140 is connected to the antenna 19 for communication using a telecommunication frequency, such as GSM or WCDMA frequency, and/or a short-range complementary frequency, such as a WLAN frequency. Thus any setting information may be transmitted to the external device 30a, 30b.

The sensing unit 100, to which the input means of the input interface are connected, is adapted to sense or register the use of a certain input means. Also, the use frequency may also be registered. The number of successive key presses or joystick activations, for choosing or using a certain function may be used as input for determining the use frequency. The use may be indicated to the controller 110, which e.g. may increase a counter value representing the use frequency during a certain time period. The time period may be initiated at switching on the terminal 1, or when the mobile terminal 1 is switched from a passive to an active mode. Alternatively, the user or another process actively resets the time period. Also, a certain setting may be reset to its original value when a use of a certain input interface reaches a predetermined value, such as a number of consecutive key presses or a specific use frequency.

The sensing unit may be provided by hardware or software according to the same principles as the GPU 131. Alternatively, the sensing unit 100 is,provided as an integral part of the controller 110.

When the use of a certain input means has been sensed, the controller 110 may indicate the specific used input means, possibly together with the use frequency, to the output interface 130, which will change settings accordingly. Alternatively, the controller will determine output interface setting information. The setting information may be provided as setting parameters, which may be directly applied by the output interface to change at least one setting of the output interface. Alternatively, the setting information is provided as control information, such that a controller of the output interface may determine and apply changed settings of the output interface.

Fig. 2b illustrates components of the external device 30a, 30b. The external device 30a, 30b comprises a communication unit 31 or interface having means for receiving setting information from a remote external device. The communication unit 31 may comprise an accessory connector, an antenna, and a receiver. The receiver is connected to a controller 32, such as a CPU, a microprocessor, or an ASIC. The controller is adapted to change settings of the output interface of the external device 30a, 30b, by e.g. applying received setting parameters or determine and apply new setting parameters based on received control information that is dependent on sensed use of an input interface of a remote electronic device. The controller 32 and the communication unit 31 is connected to a memory 33 for storing information, such as setting information and any instructions to be carried out by the controller 32. The output interface of the external device may comprise a display 34, or any other output means corresponding to the output means of the mobile terminal 1.

In operation, sensed use of the input interface of the mobile terminal 1 may change settings off the output interface of the external device 30a, 30b. This may e.g. be the case if it is desired to present information on a larger display than is provided internally of the mobile terminal 1, such as when a game is played. Then, setting information being dependent on sensed use of the input interface may be transmitted to the external device 30a, 30b, which will change a setting of its output interface accordingly.

The mobile terminal 1, or the external device 30a, 30b, may have a certain predetermined mode, wherein sensed use will change the settings automatically. However, said mode may be actively disregarded in other modes, wherein no settings will be changed automatically.

Settings that may be automatically changed by sensed use may comprise, but are not limited to:
- Menus - the color/brightness/contrast, etc. of menus and the order in which a number of functions appear in a menu may be changed. A different background color may indicate a frequent use of a certain input means.
- Audio -volume/bas/treble, etc. may be changed during e.g. an ongoing game session in dependence of sensed temperature, joystick frequency, and/or vibrations.
- Fonts, icons, animations, bitmaps - the color/brightness/contrast, size and speed of animations may be changed in dependence of used input means and use frequency. Adaptive filters within the GPU 131 may be provided to change the appearance of an object presented on the display 13 in dependence of the sensed use.

The terminal 1 may have predetermined themes comprising a number of different settings, which are associated by the theme. One or several themes may have the possibility of automatically change settings in response to sensed use. A certain activity may give different responses depending on which theme or mode a user has chosen. A first theme may entail smooth change of a certain setting, such as a color, whereas a second theme may entail a drastic change of the same setting.

If a certain setting or set of settings has been automatically changed by sensed use there may be provided an option or function, wherein storing of the set of settings may be triggered at any time, e.g. by the user or another function of the terminal. Also, reaching a predetermined level of use may trigger the storing. Then, the settings may be stored under a specific default or user defined file name, which the user may retrieve from the memory 120 at a later stage. Also, any stored setting or set of settings, of which at least one setting is changed by sensed use of an input means, may be transmitted to the external device 30a, 30b by means of the communication unit 140. The settings or e.g. a picture altered by changed settings may e.g. be directly transmitted, or provided as an electronic message, such as a MMS (Multimedia Messaging Service) or a SMS (Short Message Service) message.

In the following, a number of examples of the use of the input means that changes settings of output interface will be given. The list is not exhaustive, rather exemplary.

The frequency of the use of a certain input means may change the color/brightness/contrast of an icon presented on the display. If the camera has not been used for a certain period of time, such as a week or month, the camera icon may have a faded appearance compared to an icon of a more frequently used input means.

The joystick frequency or success of a user playing a game may change the color of the background or specific objects appearing on the display. This may be a graphical score indicator instead of presenting the score numerically.

A frequent choice of a certain function by means of e.g. the keypad 12 may change the order in which it appears in a menu. A more frequently used function may appear higher up in a list, wherein it is easier for the user to scroll to the more frequently used functions. Thus, power may be saved. Also, the field of a menu in which a function is presented may have a different color for a more frequently used function.

It is also possible to detect for how long the user has actively put the mobile terminal 1 into a passive/active mode or shut it off. An indicator, which changes appearance in dependence of said off mode may provide a dynamic off mode indicator.

A combination of sensing the use of different input means, possibly together with sensing the use frequency of each input means, may change the setting of the output interface.

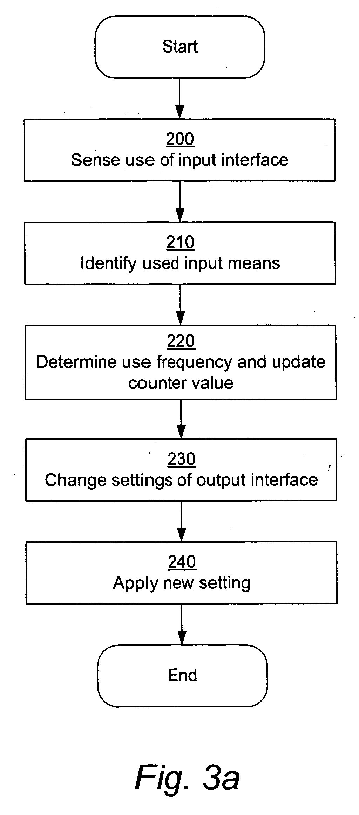

Fig. 3a illustrates a number of steps of one embodiment for carrying out the method of the invention. In a first step 200 the use of the input interface is sensed. In a second step 210 the sensed use, i.e. the specific input means, is identified. The counter value relating to the sensed use is updated in step 220 to determine the use frequency. In step 230 the identified use and change value will be used to change, possibly automatically, a certain setting. Depending on e.g. a chosen theme, the identified input means and the relating change value may be used to retrieve values of certain settings, which e.g. are provided in a look-up table of the memory 120. The change value and a value relating to a certain input means may serve as an entry for retrieving a certain setting. In step 240, the new setting is applied, wherein the output interface will take a new appearance.

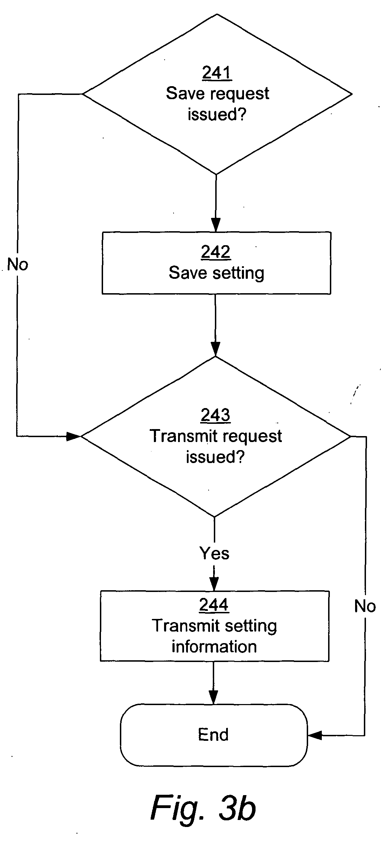

Fig. 3b is a more detailed flow chart of step 240 in Fig. 3a if a save and transmit function is provided. In step 241 it is determined whether a save request for saving the setting has been issued. If the answer is yes, the setting will be saved in step 242, and the procedure continues in step 243. If the answer in step 241 is no, the procedure proceeds to step 243. In step 243, it is determined whether a request to transmit the setting to the external device 30a, 30b is issued. If so, the setting information is transmitted in step 244. However, if the answer in step 243 is no, the procedure is ended.

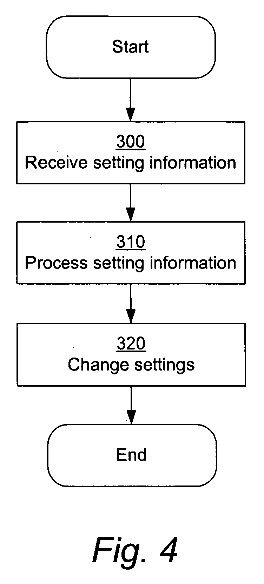

Fig. 4 illustrates the steps according to a second embodiment of the method of the invention. The method of Fig. 4 may be carried of in the external device 30a, 30b for changing at least one setting of the output interface in response to use of the input interface of the mobile terminal 1. In a first step 300, setting information is received by the receiver of the external device 30a, 30b. In step 310, the setting information is processed. The information may be directly applied if it is provided as setting parameters, or processed to determine new setting parameters if the information is provided as control information. Finally, the setting of the output interface is changed in step 320 before the procedure is ended.

The present invention has been described above with reference to specific embodiments. However, other embodiments than the above described are equally possible within the scope of the invention. Different method steps than those described above, performing the method by hardware or software, may be provided within the scope of the invention. The different features and steps of the invention may be combined in other combinations than those described. The invention is only limited by the appended patent claims.

## Claims

1. A method for altering settings of an output interface for providing information by means of an input interface for inputting information to an electronic device, **characterized by** the steps of:
sensing the use of the input interface; and
changing at least one setting of the output interface in response to said sensing.

2. The method according to claim 1, wherein the step of sensing comprises the step of identifying a certain used input means.

3. The method according to claim 1 or 2, wherein the changing of the setting is dependent on the use of a certain input means.

4. The method according to any of the claims 1-3, wherein the step of sensing comprises the step of registering the use frequency of a certain input means, and wherein the step of changing is dependent on the registered use frequency.

5. The method according to any of the claims 1-4, further comprising the step of saving a certain setting or set of settings, of which at least one setting is changed by said sensed use.

6. The method according to any of the claims 1-5, further comprising the step of setting information, which is dependent on said sensed use, to a second electronic device (30a, 30b).

7. The method according to any of the claims 1-6, wherein the change is an automatic change of said setting.

8. The method according to any of the previous claims, wherein the step of sensing the use is carried out in a first electronic device, and the step of changing the at least one setting is carried out in the first device or in a second device.

9. The method according to any of the previous claims, wherein the sensed use originates from a human being using the input interface.

10. The method according to any of the claims 1-8, wherein the sensed use is triggered by an external communication device using the input interface.

11. An electronic device comprising an input interface for inputting information into said device, **characterized by**
sensing means (100) for sensing the use of the input interface; and
control means (110) for initiating changing of at least one setting of an output interface for presenting information in response to sensing the use of the input interface.

12. The device according to claim 11, wherein the sensing means (100) is adapted to identify a certain used input means of the input interface.

13. The device according to claim 11 or 12, wherein the sensing unit (100) is adapted to register the use frequency of a certain input means of the input interface.

14. The device according to any of the claims 11 to 13, further comprising a memory (120) for storing a setting or a set of settings, of which at least one is changed by said sensed use.

15. The device according to claim 14, further comprising communication means (140) for communicating with a second device comprising the output interface, the communication means (140) is adapted to transmit setting information which is dependent on said sensed use.

16. The device according to any of the claims 11 to 15, wherein the control means (110) is adapted to automatically initiate said change in response to said sensed use when said device is in a predetermined mode defining automatic change.

17. The device according to any of the claims 11 to 16, wherein input means of the input interface is in the group of: a receiver, a microphone (11), actuation keys, a keypad (12), a touch display, a joystick (14), a slider (15), a camera (16), a thermometer (17), and a vibration sensor (18).

18. The device according to any of the claims 11 to 17, wherein said device comprises the output interface (130).

19. The device according to any of the claims 11 to 18, wherein the output interface is a visual, an audio, an sensory, or a braille output interface.

20. The device according to any of the claims 11 to 19, wherein output means of the output interface is in the group of: a loudspeaker (10), a display (13), an LED diode, a, and illuminating means.

21. The device according to any of the claims 11 to 20, wherein the device is a mobile radio terminal (1), a pager, a communicator, an electronic organizer, a smartphone, a stereo, a car stereo, kitchen equipment, or home electronics.

22. The device according to any of the claims 11 to 21, wherein the device is a mobile telephone.

23. A device (30a, 30b) for providing information, comprising an output interface, a communication interface (31), and a controller (32) for changing settings of the output interface, **characterized in that**
the controller is adapted to change at least one setting of the output interface in response to receiving output interface setting information.

24. The device according to claim 23, wherein the setting information is dependent on sensed use of an input interface of an external electronic device (1).

25. The device according to claim 23 or 24, wherein the setting information is setting parameters for providing a new setting of said input interface.

26. The device according to claim 23 or 24, wherein the setting information is control information for determining a new setting of said at least one setting.

27. The device according to any of the claims 23 to 26, wherein the output interface is a visual, an audio, a sensory, or a braille output interface.

28. The device according to any of the claims 23 to 27, wherein output means of the output interface comprises a loudspeaker, a display, a touch screen, light emitting means, or a vibrator.

29. A method for changing settings of an output interface of an electronic device (30a, 30b), which comprises said output interface for providing information, **characterized by** the steps of:
receiving output interface setting information; and
changing based on said setting information at least one setting of said output interface in response to receiving said setting information.

30. The method according to claim 29, wherein the setting information is dependent on sensed use of an input interface of a remote electronic device (1).

31. The method according to claim 29 or 30, wherein the setting information is setting or control parameters, and wherein the method further comprises the step of using said parameters to change the at least one setting of the output interface.

32. A computer program product directly loadable into a memory (1), comprising software code portions for performing the steps of claim 1 when said product is run by an electronic device (1) having digital computer capabilities.

33. The computer program product according to claim 32, wherein said product is stored on a computer usable medium.
